# EUROPÄISCHE PATENTSCHRIFT

(11) **EP 1 270 975 B1**
(45) Veröffentlichungstag und Bekanntmachung des Hinweises auf die Patenterteilung: **07.01.2004**
(21) Anmeldenummer: 02009912.3
(22) Anmeldetag: 03.05.2002
(51) Int. Cl.: F16D 23/06

(54) **Synchronisiereinrichtung**
Synchromesh
Dispositif de synchronisation

(30) Priorität: 16.06.2001 DE 10129097
(43) Veröffentlichungstag der Anmeldung: 02.01.2003
(73) Patentinhaber: DaimlerChrysler AG, 70567 Stuttgart (DE)
(72) Erfinder: Beitler, Hubert, 70806 Kornwestheim (DE); Schumann, Falk, 70736 Fellbach (DE); Tscheplak, Ernst, 71384 Weinstadt (DE); Wörner, Günter, 71394 Kernen (DE)

(56) Entgegenhaltungen:
- EP-A- 0 319 233
- DE-A- 4 444 385
- DE-B- 1 259 210
- US-A- 2 941 641

## Beschreibung

Die Erfindung betrifft eine Synchronisiereinrichtung nach dem Oberbegriff des Anspruchs 1, eine solche Synchronisiereinrichtung ist aus DE-A-1 259 210 bekannt.

Aus der EP 0 976 941 B1 ist eine Synchronisiereinrichtung für ein Fahrzeuggetriebe bekannt. Die Synchronisiereinrichtung besitzt einen Synchronkörper bzw. Gleichlaufkörper und zwei Synchronringe, über die jeweils zwei mit Differenzdrehzahl zueinander drehende Teile auf eine gleiche Drehzahl gebracht werden können. Eine Vorsynchronisation erfolgt über ein Kugel-Feder-Gleitstein-System.

Um in einer Ausgangsstellung des Synchronrings vor einem Synchronisiervorgang einen Kontakt zwischen dem Synchronring und einem mit dem Synchronring während eines Synchronisiervorgangs korrespondierenden Klauenrad und dadurch bedingte Schleppmomente sowie Prellgeräusche zu vermeiden, wird vorgeschlagen, daß zumindest ein Gleitstein des Kugel-Feder-Gleitstein-Systems permanentmagnetisch ausgeführt ist. Der ferromagnetische Synchronring wird durch eine magnetische Anziehungskraft des Gleitsteins in axialer Richtung fixiert bzw. in einer axialen Position gehalten, in der ein spielbedingter Kontakt zwischen dem Synchronring und dem Klauenrad vermieden wird.

Der Erfindung liegt die Aufgabe zugrunde, eine gattungsbildende Synchronisiereinrichtung mit gesteigertem Wirkungsgrad und reduziertem Geräuschpegel bereitzustellen. Sie wird gemäß der Erfindung durch die Merkmale des Anspruchs 1 gelöst. Weitere Ausgestaltungen ergeben sich aus den Unteransprüchen.

Die Erfindung geht aus von einer Synchronisiereinrichtung, insbesondere für ein Kraftfahrzeuggetriebe, mit einem Gleichlaufkörper und wenigstens einem Synchronring, wobei der Synchronring in seiner Ausgangsstellung vor einem Synchronisiervorgang über eine Einheit mit einer Haltekraft gehalten ist.

Es wird vorgeschlagen, daß die Einheit über eine Verbindung in der Ausgangsstellung des Synchronrings eine Relativbewegung zwischen dem Gleichlaufkörper und dem Synchronring vermeidet.

Der Erfindung liegt die Erkenntnis zugrunde, daß insbesondere bei niedrigen Motordrehzahlen, und zwar vor allem bei Dieselmotoren, Drehschwingungen in ein Kraftfahrzeuggetriebe eingeleitet werden, wodurch im Kraftfahrzeuggetriebe bewegliche Teile desselben, bedingt durch deren verschiedene Massenträgheitsmomente, verschieden stark angeregt werden. Der Synchronring wird dadurch relativ zum Gleichlaufkörper verdreht, was zu hörbaren, hochfrequenten Geräuschen führt. Ferner entsteht Gleitreibung zwischen dem Synchronring und dem Gleichlaufkörper, die zu einem Verschleiß der Bauteile führt und den Wirkungsrad verschlechtert.

Mit der erfindungsgemäßen Lösung werden in der Ausgangsstellung des Synchronrings zwischen dem Synchronring und dem Gleichlaufkörper Relativbewegungen, insbesondere in Umfangsrichtung, und dadurch bedingte Geräusche sowie Gleitreibung vermieden. Der Verschleiß wird reduziert und der Wirkungsgrad gesteigert.

Ist die Verbindung durch eine auf den Synchronring wirkende Vorsynchronisationskraft trennbar, kann eine durch die Einheit bedingte Funktionsstörung des Synchronrings, und zwar insbesondere während seines Umschlagvorgangs, sicher vermieden werden.

Die Einheit kann verschiedene, dem Fachmann als sinnvoll erscheinende Konstruktionen aufweisen, und die Haltekraft kann durch verschiedene Elemente erzeugt sein, beispielsweise über ein magnetisches Element, ein Fliehkraftelement und/oder ein Klemmelement usw. Besonders vorteilhaft besitzt die Einheit jedoch zumindest ein Federelement und belastet den Synchronring mit einer wenigstens zum Teil durch eine Federkraft hervorgerufenen Normalkraft in Richtung Gleichlaufkörper, wobei die Normalkraft kleiner ist als die auf den Synchronring wirkende Vorsynchronisationskraft. Gegenüber einem Fliehkraftelement kann insbesondere bei kleinen Drehzahlen eine ausreichend große Haltekraft und gegenüber einem magnetischen Element kann insbesondere eine besonders schmutzunempfindliche Konstruktion erreicht werden. Ist der Synchronring über die Normalkraft am Gleichlaufkörper zentriert, kann eine Bewegung des Synchronrings in radialer Richtung und ein Kontakt mit einem angrenzenden Kupplungskörper einfach und sicher vermieden werden.

In einer weiteren Ausgestaltung der Erfindung wird vorgeschlagen, daß das Federelement von einer Zugfeder gebildet ist. Zugfedern, insbesondere Schraubenzugfedern, sind kostengünstig herstellbar und sind platzsparend in der Synchronisiereinrichtung integrierbar. Ferner kann mit einer Zugfeder einfach eine Ausgleichsbewegung während eines Umschlagvorgangs des Synchronrings gewährleistet werden.

Vorteilhaft.ist die Zugfeder in axialer Richtung ausgerichtet, die Zugfeder kann jedoch auch in andere Richtungen ausgerichtet sein, beispielsweise in radialer Richtung und durch einen Umlenkmechanismus eine Kraft in eine gewünschte Richtung, insbesondere in axialer Richtung erzeugen. Ist das Federelement bügelförmig ausgebildet, kann insbesondere gegenüber einer Schraubenzugfeder eine besonders einfache Montage erreicht werden, und zwar indem das bügelförmige Federelement den Gleichlaufkörper und den Synchronring übergreifend ausgeführt werden kann. Das bügelförmige Federelement kann dabei mit Druckkräften auf den Synchronring und den Gleichlaufkörper wirken, und es können zusätzliche Befestigungselemente und zusätzliche Durchgangskanäle durch den Gleichlaufkörper und/oder den Synchronring vermieden werden. Ferner sind grundsätzlich sämtliche, dem Fachmann als sinnvoll erscheinende Federelemente denkbar, beispielsweise Tellerfedern, Torsionsfedern, Druckfedern usw.

Wirkt zumindest ein Federelement auf zwei Synchronringe, können mit insgesamt wenigen Federelementen zwei Synchronringe erfindungsgemäß zum Gleichlaufkörper fixiert werden. Vorteilhaft ist dabei das Federelement, insbesondere das als Schraubenzugfeder ausgeführte Federelement, durch ein Langloch des Gleichlaufkörpers geführt, das bei einem Synchronisiervorgang eine freie Bewegung des Federelements zum Gleichlaufkörper ermöglicht. Eine Behinderung des Synchronisiervorgangs durch das Federelement kann sicher und einfach vermieden und das Federelement kann platzsparend integriert werden.

Um eine einfache Montage eines als Zugfeder ausgebildeten Federelements zu ermöglichen, ist das Federelement ferner vorteilhaft durch einen Durchgangskanal des Synchronrings geführt, so daß dieses von der dem Gleichlaufkörper abgewandten Seite mit dem Synchronring fest verbunden und möglicherweise vorgespannt werden kann.

Sind zumindest drei Federelemente gleichmäßig über den Umfang des Synchronrings verteilt angeordnet, kann eine vorteilhafte, gleichmäßige Kräfteverteilung erreicht werden. Grundsätzlich ist jedoch auch denkbar, nur ein Federelement, beispielsweise rotationssymmetrisch, zwei Federelemente oder mehr als drei Federelemente vorzusehen.

Erfindungsgemäß wird vorgeschlagen, daß der Gleichlaufkörper und der Synchronring in der Ausgangsstellung des Synchronrings über eine Kontaktfläche verbunden sind, die einen größeren Haftreibwert aufweist als eine glatte, unbehandelte Fläche des Gleichlaufkörpers und/oder des Synchronrings. Es kann mit einer kleinen Federkraft bzw. Normalkraft eine sichere Verbindung, insbesondere in Umfangsrichtung, zwischen dem Synchronring und dem Gleichlaufkörper erreicht werden. Das Federelement ist klein, leicht und platzsparend ausführbar. Ferner kann der.Synchronring vorteilhaft mit einer kleinen Kraft vom Gleichlaufkörper in axialer Richtung abgehoben und die Verbindung kann sicher durch eine Vorsynchronisationskraft getrennt werden. Die Kontaktfläche kann dabei von einer Beschichtung oder einem zusätzlichen Reibbelag gebildet sein, oder der Synchronring und/oder vorteilhaft der Gleichlaufkörper kann entsprechend behandelt und die Kontaktfläche kann vom Synchronring und/oder vom Gleichlaufkörper gebildet sein.

Ferner kann mit einer kleinen Normalkraft eine sichere Verbindung in Umfangsrichtung erreicht werden, indem der Gleichlaufkörper und der Synchrohring in der Ausgangsstellung des Synchronrings in Umfangsrichtung über eine Formschlußverbindung verbunden sind. Um während eines Synchronisiervorgangs einen Umschlag des Synchronrings in Umfangsrichtung in seine Sperrstellung zu ermöglichen, sind dabei korrespondierende Formschlußelemente der Formschlußverbindung mit einer Überdeckung ausgeführt, die kleiner ist als ein Betätigungsweg des Synchronrings zu einem korrespondierenden Kupplungskörper.

Der Formschluß kann durch verschiedene, dem Fachmann als sinnvoll erscheinende Konstruktionen bzw. Formschlußelemente erreicht werden, beispielsweise mit an den Gleichlaufkörper angeformten Zapfen, die in Ausnehmungen des Synchronrings eingreifen usw. Ist jedoch zumindest ein Formschlußelement von einer Verzahnung des Gleichlaufkörpers und/oder des Synchronrings gebildet, können zusätzliche Bauteile, Bauraum, Gewicht, Montageaufwand sowie Kosten eingespart werden.

Weitere Vorteile ergeben sich aus der folgenden Zeichnungsbeschreibung. In der Zeichnung sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Längsschnitt durch einen Teil einer erfindungsgemäßen Synchronisiereinrichtung,
- Fig. 2: die Synchronisiereinrichtung aus Fig. 1 nach einem Betätigungsweg eines Synchronrings,
- Fig. 3: einen vergrößerten Ausschnitt III aus Fig. 2,
- Fig. 4: einen vergrößerten Ausschnitt IV aus Fig. 2,
- Fig. 5: eine Vorderansicht eines Synchronrings aus Fig. 1 und
- Fig. 6: eine Vorderansicht eines Gleichlaufkörpers aus Fig. 1.

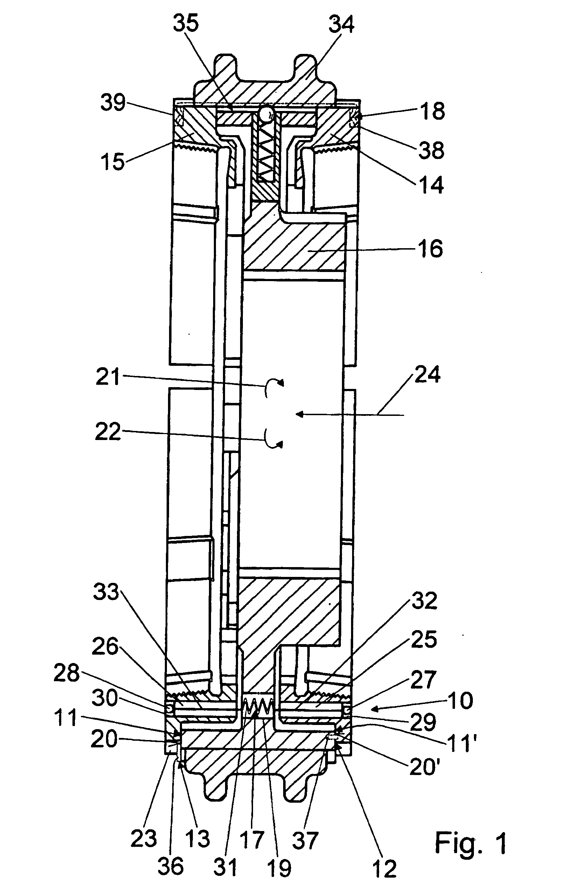

Fig. 1 zeigt einen Teil einer Synchronisiereinrichtung eines Kraftfahrzeuggetriebes mit einem Gleichlaufkörper 16 und mit einem in axialer Richtung 24 vor dem Gleichlaufkörper 16 angeordneten Synchronring 14 und einem in axialer Richtung 24 nach dem Gleichlaufkörper 16 angeordneten Synchronring 15. Die Synchronringe 14, 15 sind in ihren Ausgangsstellungen vor einem Synchronisiervorgang über eine Einheit 10 mit einer Haltekraft gehalten. Erfindungsgemäß vermeidet die Einheit 10 in den Ausgangsstellungen der Synchronringe 14, 15 über jeweils eine Verbindung 11, 11', und zwar über jeweils eine reibschlüssige Verbindung 11, 11', Relativbewegungen, insbesondere in Umfangsrichtung 21, 22, zwischen dem Gleichlaufkörper 16 und den Synchronringen 14, 15.

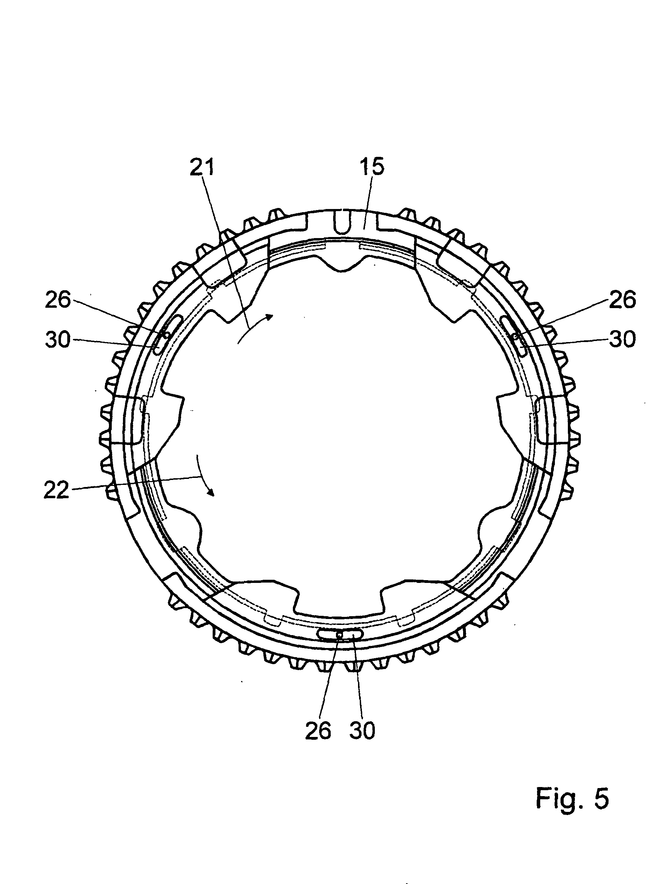

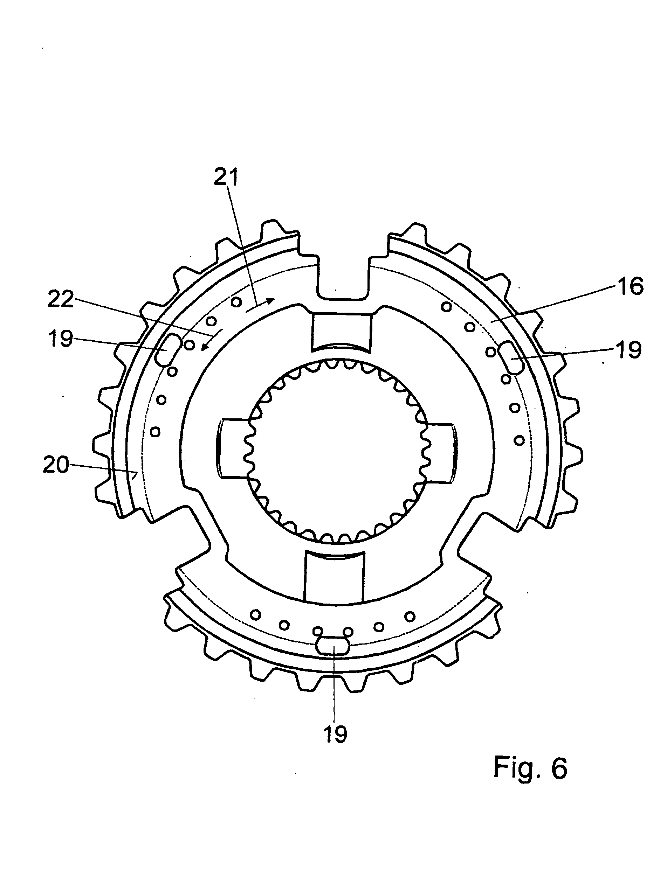

Die Einheit 10 besitzt drei gleichmäßig über den Umfang des Synchronrings 14, 15 verteilte, als Schraubenzugfedern ausgebildete Federelemente 17 (Fig. 1 und 5). Das Federelement 17 ist durch ein sich in Umfangsrichtung 21, 22 erstreckendes Langloch 19 des Gleichlaufkörpers 16 und durch eine Durchgangsbohrung 25 des Synchronrings 14 und durch eine Durchgangsbohrung 26 des Synchronrings 15 geführt und ist jeweils an seinen hakenförmigen Enden in Querstiften 27, 28 eingehängt (Fig. 1, 5 und 6). Der Querstift 27 ist auf einer dem Gleichlaufkörper 16 abgewandten Seite des Synchronrings 14 in einer Vertiefung 29 desselben versenkt angeordnet, und der Querstift 28 ist auf einer dem Gleichlaufkörper 16 abgewandten Seite des Synchronrings 15 in einer Vertiefung 30 desselben versenkt angeordnet. Gewindegänge 31 des Federelements 17 sind im Langloch 19 angeordnet, und geradlinige Bereiche 32, 33 des Federelements 17 sind jeweils in den Durchgangsbohrungen 25, 26 der Synchronringe 14, 15 angeordnet.

Die Federelemente 17 wirken jeweils auf beide Synchronringe 14, 15 und ziehen diese mit einer Federkraft axial in Richtung Gleichlaufkörper 16, so daß die Synchronringe 14, 15 mit ihren dem Gleichlaufkörper 16 zugewandten Seiten mit jeweils einer radial äußeren, ringförmigen Kontaktfläche an radial äußeren, ringförmigen Kontaktflächen 20, 20' des Gleichlaufkörpers 16 zur Anlage kommen. Die Kontaktflächen 20, 20' des Gleichlaufkörpers 16 sind aufgerauht, so daß im Vergleich zu einer glatten Oberfläche des Gleichlaufkörpers 16 ein größerer Haftreibwert entsteht. Möglich wäre auch, den Gleichlaufkörper 16 zu beschichten, beispielsweise in einem Sintervorgang.

Zwischen den Kontaktflächen der Synchronringe 14, 15 und den Kontaktflächen 20, 20' des Gleichlaufkörpers 16 entstehen die reibschlüssigen Verbindungen 11, 11', und zwar sind die Federelemente 17 in der Weise ausgelegt, daß eine durch die Federelemente 17;hervorgerufene Normalkraft multipliziert mit einem vorliegenden Haftreibwert größer ist als auf die Synchronringe 14, 15 wirkende, durch Drehschwingungen verursachte Beschleunigungskräfte. Ferner werden die Synchronringe 14, 15 über die Einheit 10 bzw. über die Normalkraft am Gleichlaufkörper 16 zentriert.

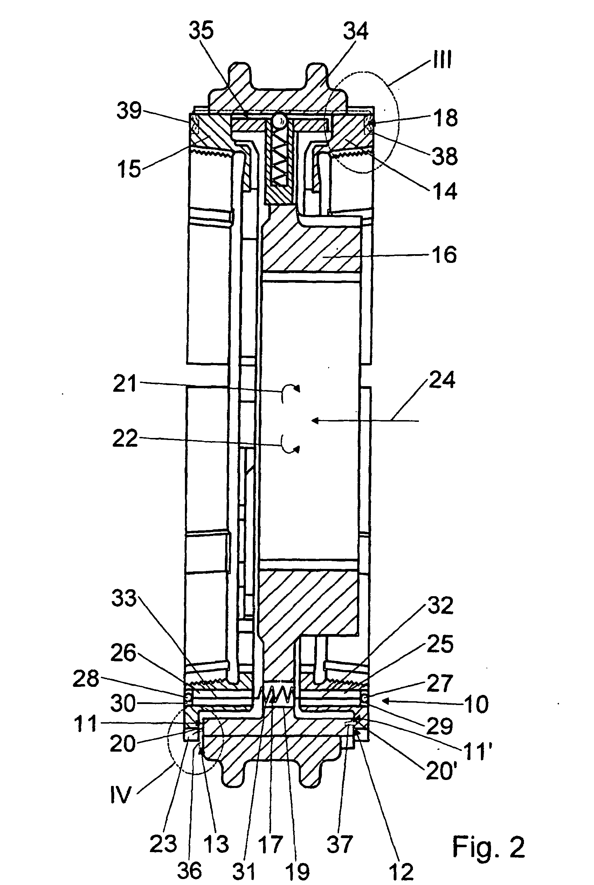

Die Normalkraft ist jedoch kleiner als eine auf den Synchronring 14, 15 wirkende Vorsynchronisationskraft in axialer Richtung bzw. ist die von gleichmäßig über den Umfang verteilten Druckstücken 35 übertragbare Vorsynchronisationskraft größer als die Normalkraft. Wird eine Vorsynchronisation über eine nicht näher dargestellte Schaltgabel, eine Schiebemuffe 34 und über die Druckstücke 35 eingeleitet, und beispielsweise der Synchronring 15 mit einer Vorsynchronisationskraft in axialer Richtung 24 über die Druckstücke 35 belastet, wird der Synchronring 15 vom Gleichlaufkörper 16 in axialer Richtung 24 abgehoben (Fig. 2). Die Verbindung 11 zwischen dem Synchronring 15 und dem Gleichlaufkörper 16 wird getrennt, und der Synchronring 15 kann in Umfangsrichtung 21 oder 22 in seine Sperrstellung umschlagen, wobei die Langlöcher 19 jeweils eine freie Bewegung der Federelemente 17 zum Gleichlaufkörper 16 ermöglichen.

Anstatt reine reibschlüssige Verbindungen 11, 11' sind auch Formschlußverbindungen 12, 13 zwischen dem Gleichlaufkörper 16 und den Synchronringen 14, 15 denkbar, wie dies in Fig. 1 und 2 angedeutet ist. Die Formschlußverbindung 13 wird mit an den Gleichlaufkörper 16 angeformten als Vorsprünge 36 ausgebildeten Formschlußelementen erreicht, die in der Ausgangsstellung des Synchronrings 15 in eine Sperrverzahnung 23 des Synchronrings 15 eingreift. Die Sperrverzahnung 23 bildet damit Formschlußelemente für die Formschlußverbindung 13.

Die Formschlußverbindung 12 wird mit in Ausnehmungen des Gleichlaufkörpers 16 befestigten, als Stifte 37 ausgebildeten Formschlußelementen erreicht, die in der Ausgangsstellung des Synchronrings 14 in als Ausnehmungen ausgebildete Formschlußelemente des Synchronrings 14 formschlüssig eingreifen.

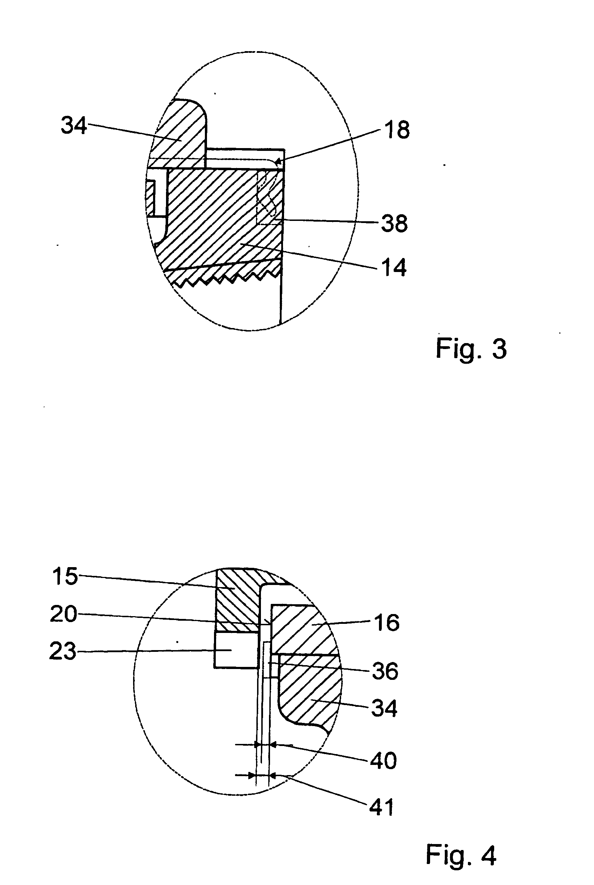

Die Formschlußelemente der Formschlußverbindungen 12, 13 besitzen in den Ausgangsstellungen der Synchronringe 14, 15 jeweils eine Überdeckung 40, die kleiner ist als ein Betätigungsweg 41 der Synchronringe 14, 15 in bzw. entgegen der axialen Richtung 24 zu jeweils einem korrespondierenden, nicht näher dargestellten Kupplungskörper, so daß die Formschlußverbindung 12 bzw. 13 durch die Bewegung des Synchronrings 14 bzw. 15 in Richtung des jeweiligen Kupplungskörpers getrennt wird, bevor der Synchronring 14 bzw. 15 mit dem entsprechenden Kupplungskörper in Kontakt kommt (Fig. 2 und 4). Fig. 2 zeigt den Synchronring 15 kurz vor dem Kontakt mit einem korrespondierenden Kupplungskörper, wobei die Formschlußverbindung 13 getrennt ist.

Anstatt als Schraubenzugfeder ausgeführte Federelemente 17 sind auch bügelförmige Federelemente 18 verwendbar, wie dies in Fig. 1 und 3 schematisch angedeutet ist. Das bügelförmige Federelement 18 ist radial innerhalb der Schiebemuffe 34 und radial außerhalb des Gleichlaufkörpers 16 und den Synchronringen 14, 15 in einem Freiraum angeordnet und übergreift den Gleichlaufkörper 16 und die Synchronringe 14, 15 in axialer Richtung 24. Das bügelförmige Federelement 18 wirkt mit seinen radial nach innen weisenden Enden auf die von dem Gleichlaufkörper 16 abgewandten Seiten der Synchronringe 14, 15 axial in Richtung des Gleichlaufkörpers 16 und drückt die Synchronringe 14, 15 mit ihren Kontaktflächen an die Kontaktflächen 20, 20' des Gleichlaufkörpers 16. Die S-förmig bzw. dazu gespiegelten gebogenen Enden des Federelements 18 sind in Vertiefungen 38, 39 der Synchronringe 14, 15 versenkt angeordnet.

Bei einem Umschlagvorgang des Synchronrings 14 bzw. 15 wird eine Relativbewegung zwischen den Synchronringen 14, 15 bzw. zwischen dem umschlagenden Synchronring 14 bzw. 15 und dem Gleichlaufkörper 16 durch das Federelement 18 ausgeglichen, indem dieses um seine Längsachse verkippt, ohne dabei wesentlich weiter gespannt zu werden. Durch die S-förmig bzw. dazu gespiegelten gebogenen Enden des bügelförmigen Federelements 18 wird eine punktuelle Auflage zwischen dem Federelement 18 und den Synchronringen 14, 15 und eine damit verbundene kleine Reibung beim Verkippen des Federelements 18 erreicht.

## Patentansprüche

1. Synchronisiereinrichtung, insbesondere für ein Kraftfahrzeuggetriebe, mit einem Gleichlaufkörper und wenigstens einem Synchronring (14, 15), wobei der Synchronring (14, 15) in seiner Ausgangsstellung vor einem Synchronisiervorgang über eine Einheit (10) mit einer Haltekraft gehalten ist,
wobei die Einheit (10) über eine Verbindung (11, 12, 13) in der Ausgangsstellung des Synchronrings (14, 15) eine Relativbewegung zwischen dem Gleichlaufkörper (16) und dem Synchronring (14, 15) vermeidet,
und wobei der Gleichlaufkörper (16) und der Synchronring (14, 15) in der Ausgangsstellung des Synchronrings (14, 15) über eine Kontaktfläche (20) verbunden sind, die einen größeren Haftreibwert aufweist als eine glatte, unbehandelte Fläche des Gleichlaufkörpers (16) und/oder des Synchronrings (14, 15).

2. Synchronisiereinrichtung nach Anspruch 1,
**dadurch gekennzeichnet,**
**daß** die Verbindung (11, 12, 13) durch eine auf den Synchronring (14, 15) wirkende Vorsynchronisationskraft trennbar ist.

3. Synchronisiereinrichtung nach Anspruch 2,
**dadurch gekennzeichnet,**
**daß** die Einheit (10) zumindest ein Federelement (17, 18) aufweist und den Synchronring (14, 15) mit einer wenigstens zum Teil durch eine Federkraft hervorgerufenen Normalkraft in Richtung Gleichlaufkörper (16) belastet, wobei die Normalkraft kleiner ist als die auf den Synchronring (14, 15) wirkende Vorsynchronisationskraft.

4. Synchronisiereinrichtung nach Anspruch 3,
**dadurch gekennzeichnet,**
**daß** der Synchronring (14, 15) über die Normalkraft am Gleichlaufkörper (16) zentriert ist.

5. Synchronisiereinrichtung nach Anspruch 3 oder 4,
**dadurch gekennzeichnet,**
**daß** das Federelement (17) von einer Zugfeder gebildet ist.

6. Synchronisiereinrichtung nach Anspruch 3 oder 4,
**dadurch gekennzeichnet,**
**daß** das Federelement (18) bügelförmig ausgebildet ist.

7. Synchronisiereinrichtung nach einem der Ansprüche 3 bis 6,
**dadurch gekennzeichnet,**
**daß** zumindest ein Federelement (17, 18) auf zwei Synchronringe (14, 15) wirkt.

8. Synchronisiereinrichtung nach Anspruch 7,
**dadurch gekennzeichnet,**
**daß** das Federelement (17) durch ein Langloch (19) des Gleichlaufkörpers (16) geführt ist, das bei einem Synchronisiervorgang eine freie Bewegung des Federelements (17) zum Gleichlaufkörper (16) ermöglicht.

9. Synchronisiereinrichtung nach einem der Ansprüche 3 bis 8,
**dadurch gekennzeichnet,**
**daß** zumindest drei Federelemente (17, 18) gleichmäßig über den Umfang des Synchronrings (14, 15) verteilt angeordnet sind.

10. Synchronisiereinrichtung nach einem der vorhergehenden Ansprüche,
**dadurch gekennzeichnet,**
**daß** der Gleichlaufkörper (16) und der Synchronring (14, 15) in der Ausgangsstellung des Synchronrings (14, 15) in Umfangsrichtung (21, 22) über eine Formschlußverbindung (12, 13) verbunden sind, wobei korrespondierende Formschlußelemente der Formschlußverbindung (12, 13) eine Überdeckung (40) aufweisen, die kleiner ist als ein Betätigungsweg (41) des Synchronrings (14, 15) zu einem korrespondierenden Kupplungskörper.

11. Synchronisiereinrichtung nach Anspruch 10,
**dadurch gekennzeichnet,**
**daß** zumindest ein Formschlußelement von einer Verzahnung (23) des Synchronrings (15) und/oder des Gleichlaufkörpers gebildet ist.

## Claims

1. Synchroniser, in particular for a motor vehicle transmission, comprising a synchroniser hub and at least one synchroniser ring (14, 15), whereby the synchroniser ring (14, 15) is held by means of a unit (10) with a retaining force in its starting position prior to a synchronising process,
whereby the unit (10) prevents a relative movement between the synchroniser hub (16) and the synchroniser ring (14, 15) in the starting position ofthe synchroniser ring (14, 15) by means of a connection (11, 12, 13),
and whereby the synchroniser hub (16) and the synchroniser ring (14, 15) are, in the starting position of the synchroniser ring (14, 15), connected by a contact surface (20) with a higher coefficient of friction than a plain, untreated surface of the synchroniser hub (16) and/or the synchroniser ring (14, 15).

2. Synchroniser according to claim 1,
**characterised in that**
the connection (11, 12, 13) can be broken by a pre-synchronisation force acting on the synchroniser ring (14, 15).

3. Synchroniser according to claim 2,
**characterised in that**
the unit (10) comprises at least one spring element (17, 18) and loads the synchroniser ring (14, 15) with a normal force at least partially produced by spring power in the direction of the synchroniser hub (16), whereby the normal force is lower than the pre-synchronisation force acting on the synchroniser ring (14, 15).

4. Synchroniser according to claim 3,
**characterised in that**
the synchroniser ring (14, 15) is centred on the synchroniser hub (16) by means of the normal force.

5. Synchroniser according to claim 3 or 4,
**characterised in that**
the spring element (17) is represented by a tension spring.

6. Synchroniser according to claim 3 or 4,
**characterised in that**
the spring element (18) is bow-shaped.

7. Synchroniser according to any of claims 3 to 6,
**characterised in that**
at least one spring element (17, 18) acts on two synchroniser rings (14, 15).

8. Synchroniser according to claim 7,
**characterised in that**
the spring element (17) is guided through a slot (19) of the synchroniser hub (16), which permits a free movement of the spring element (17) towards the synchroniser hub (16) during a synchronising process.

9. Synchroniser according to any of claims 3 to 8,
**characterised in that**
at least three spring elements (17, 18) are evenly distributed over the circumference of the synchroniser ring (14, 15).

10. Synchroniser according to any of the preceding claims,
**characterised in that**
the synchroniser hub (16) and the synchroniser ring (14, 15) are, in the starting position of the synchroniser ring (14, 15), connected in the circumferential direction (21, 22) by means of a positive-locking arrangement (12, 13), whereby corresponding positive-locking elements of the positive-locking arrangement (12, 13) have an overlap (40) smaller than the travel (41) of the synchroniser ring (14, 15) to a corresponding clutch body.

11. Synchroniser according to claim 10,
**characterised in that**
at least one positive-locking element is represented by toothing (23) of the synchroniser ring(15) and/or the synchroniser hub.

## Revendications

1. Dispositif de synchronisation, en particulier pour une boîte de vitesses de véhicule automobile, comportant un corps de synchronisation et au moins une bague de synchro (14, 15), la bague de synchro (14, 15) étant retenue dans sa position initiale, avant une opération de synchronisation, par une force de retenue via une unité (10), l'unité (10) évitant un mouvement relatif entre le corps de synchronisation (16) et la bague de synchro (14, 15) via une liaison (11, 12, 13) dans la position initiale de la bague de synchro (14, 15), et le corps de synchronisation (16) et la bague de synchro (14, 15) étant reliés dans la position initiale de la bague de synchro (14, 15) via une surface de contact (20) qui présente un coefficient de friction par adhésion supérieur à celui d'une surface lisse non traitée du corps de synchronisation (16) et/ou de la bague de synchro (14, 15).

2. Dispositif de synchronisation selon la revendication 1, **caractérisé en ce que** la liaison (11, 12, 13) est susceptible d'être séparée par une force de pré-synchronisation agissant sur la bague de synchro (14, 15).

3. Dispositif de synchronisation selon la revendication 2, **caractérisé en ce que** l'unité (10) comprend au moins un élément élastique (17, 18) et sollicite la bague de synchro (14, 15) par une force normale causée au moins partiellement par une force élastique en direction du corps de synchronisation (16), la force normale étant inférieure à la force de pré-synchronisation agissant sur la bague de synchro (14, 15).

4. Dispositif de synchronisation selon la revendication 3, **caractérisé en ce que** la bague de synchro (14, 15) est centrée sur le corps de synchronisation (16) via la force normale.

5. Dispositif de synchronisation selon l'une ou l'autre des revendications 3 et 4, **caractérisé en ce que** l'élément élastique (17) est formé par un ressort de traction.

6. Dispositif de synchronisation selon l'une ou l'autre des revendications 3 et 4, **caractérisé en ce que** l'élément élastique (18) est réalisé en forme d'arceau.

7. Dispositif de synchronisation selon l'une des revendications 3 à 6, **caractérisé en ce qu'**au moins un élément élastique (17, 18) agit sur deux bagues de synchro (14, 15).

8. Dispositif de synchronisation selon la revendication 7, **caractérisé en ce que** l'élément élastique (17) est mené à travers un trou oblong (19) du corps de synchronisation (16), qui, lors d'une opération de synchronisation, permet un mouvement libre de l'élément élastique (17) par rapport au corps de synchronisation (16).

9. Dispositif de synchronisation selon l'une des revendications 3 à 8, **caractérisé en ce qu'**au moins trois éléments élastiques (17, 18) sont agencés en répartition régulière sur la périphérie de la bague de synchro (14, 15).

10. Dispositif de synchronisation selon l'une des revendications précédentes, **caractérisé en ce que** le corps de synchronisation (16) et la bague de synchro (14, 15) sont reliés en direction périphérique via une liaison en coopération de formes (12, 13) dans la position initiale de la bague de synchro (14, 15), des éléments correspondants de la liaison en coopération de formes (12, 13) présentant un chevauchement (40) qui est inférieur à une course d'actionnement (41) de la bague de synchro (14, 15) par rapport à un corps d'accouplement correspondant.

11. Dispositif de synchronisation selon la revendication 10, **caractérisé en ce qu'**au moins un élément de coopération de formes est formé par une denture (23) de la bague de synchro (15) et/ou du corps de synchronisation.
